# EUROPEAN PATENT APPLICATION

(11) **EP 4 443 865 A1**
(43) Date of publication of application: **09.10.2024**
(21) Application number: 22901051.7
(22) Date of filing: 10.11.2022
(51) Int. Cl.: H04N 5/92, H04N 5/76, H04N 23/60

(54) **IMAGE FILE, GENERATION DEVICE, AND DATA PROCESSING METHOD**

(30) Priority: 30.11.2021 JP 2021194861
(71) Applicant: FUJIFILM Corporation, Tokyo 106-8620 (JP)
(72) Inventor: KOBAYASHI, Toshiki, Saitama-shi, Saitama 331-9624 (JP); NISHIO, Yuya, Saitama-shi, Saitama 331-9624 (JP); KASAHARA, Shoki, Saitama-shi, Saitama 331-9624 (JP)
(74) Representative: Dehns Germany Partnerschaft mbB
(86) International application number: PCT/JP2022/041983
(87) International publication number: WO 2023/100618

(57) **Abstract**

An image file includes image data including a subject image and an artificial image, and supplementary data including related data of the artificial image.

## Description

### BACKGROUND OF THE INVENTION

### 1. Field of the Invention

The technology of the present disclosure relates to an image file, a generation apparatus, and a data processing method.

### 2. Description of the Related Art

JP2017-182628A discloses a computer device that causes a user terminal to perform an augmented reality (AR) display on an object that is a target of the AR display based on a user's interests, in which the computer device is configured to: store static metadata that is object-specific information; receive, from the user terminal, an image or video captured at the user terminal and additional information regarding the image or video; acquire static metadata corresponding to an object included in the received image or video; acquire dynamic metadata, which is dynamic information related to the user's interest in the object, from the received image or video and additional information in a case in which static metadata is acquired; calculate an interest value of the object based on the dynamic metadata; decide a display target at the user terminal from among the objects based on the calculated interest value; create display data, which is data for AR display, for each object that is the decided display target based on the static metadata; and transmit the created display data to the user terminal.

JP2012-209943A discloses an annotation method for adding annotations to a plurality of objects in an image of a scene captured by a camera on a display, the annotation method including: receiving i) metadata representing a plurality of different annotations applied to each of a plurality of objects, and ii) position information specifying a real position of each of the plurality of objects in a scene to which the annotation is applied within the image; determining a focal length of the camera and a tilt applied to the camera; deciding a position of the camera with respect to the captured scene; applying annotations to images captured by the camera according to the position information; and acquiring position information in the scene from an image capture device having a different field of view than the camera, the position information being decided from images of the scene captured by the image capture device.

JP2012-118967A discloses a mobile terminal including: a reception unit that receives content information; an extraction unit that recognizes any item from the received content information and extracts detailed information that becomes a field value of an augmented reality database from meta information corresponding to the recognized item; an augmented reality database to store the extracted detailed information; and a display unit that combines the information stored in the augmented reality database with a displayed video and outputs the combined video as augmented reality.

JP6849842B discloses an augmented reality system comprising: an object management unit that places a content object in an augmented reality space; an advertising management unit that places an advertising object that displays advertising in the augmented reality space; an image generation unit that generates an image including a content object; and a posting unit that refers to a distributed ledger of a blockchain network that manages rights information indicating that a user has a right to post an image including a content object and an advertising object, is allowed to post the image to a social network in a case in which an advertising object is included in the image, and posts the image to the social network.

### SUMMARY OF THE INVENTION

One embodiment according to the technology of the present disclosure provides an image file, a generation apparatus, and a data processing method that can improve usability compared to a case in which an image file is composed only of image data consisting of a subject image and an artificial image.

According to a first aspect of the technology of the present disclosure, there is provided an image file comprising: image data including a subject image and an artificial image; and supplementary data including related data of the artificial image.

According to a second aspect of the technology of the present disclosure, there is provided a generation apparatus configured to: generate image data including a subject image obtained by being imaged by an image sensor and an artificial image; generate supplementary data including related data of the artificial image; and generate an image file including the image data and the supplementary data.

According to a third aspect of the technology of the present disclosure, there is provided a data processing method comprising: an acquisition step of acquiring a plurality of image files; and a search step of performing a search on the plurality of image files, in which the plurality of image files include an image file including image data including a subject image and an artificial image, and supplementary data including related data of the artificial image.

### BRIEF DESCRIPTION OF THE DRAWINGS

Fig. 1 is a schematic configuration diagram showing an example of an overall configuration of an information processing system.
Fig. 2 is a schematic configuration diagram showing an example of an electrical hardware configuration of an imaging apparatus.
Fig. 3 is a conceptual diagram showing an example of processing content of an AR image file acquisition unit and an image data generation unit.
Fig. 4 is a conceptual diagram showing an example of processing content of the AR image file acquisition unit and a supplementary data generation unit.
Fig. 5 is a conceptual diagram showing an example of first processing content of an image file output unit.
Fig. 6 is a conceptual diagram showing an example of second processing content of the image file output unit.
Fig. 7 is a schematic configuration diagram showing an example of an electrical hardware configuration of an information processing apparatus.
Fig. 8 is a conceptual diagram showing an example of processing content of an image file acquisition unit.
Fig. 9 is a conceptual diagram showing an example of processing content of a display control unit and an identifier assignment unit.
Fig. 10 is a conceptual diagram showing an example of processing content of an image file search unit, a display control unit, and a training data generation unit.
Fig. 11 is a flowchart showing an example of a flow of image file output processing.
Fig. 12 is a flowchart showing an example of a flow of training data generation processing.
Fig. 13 is a conceptual diagram showing a modification example of the processing content of the AR image file acquisition unit and the supplementary data generation unit.
Fig. 14 is a conceptual diagram showing a modification example of the processing content of the supplementary data generation unit.
Fig. 15 is a conceptual diagram showing a modification example of the processing content of the supplementary data generation unit.
Fig. 16 is a conceptual diagram showing a modification example of the processing content of the image file output unit.
Fig. 17 is a conceptual diagram showing a modification example of the processing content of the image file output unit.

### DESCRIPTION OF THE PREFERRED EMBODIMENTS

An example of an image file, a generation apparatus, and a data processing method according to the technology of the present disclosure will be described below with reference to the accompanying drawings.

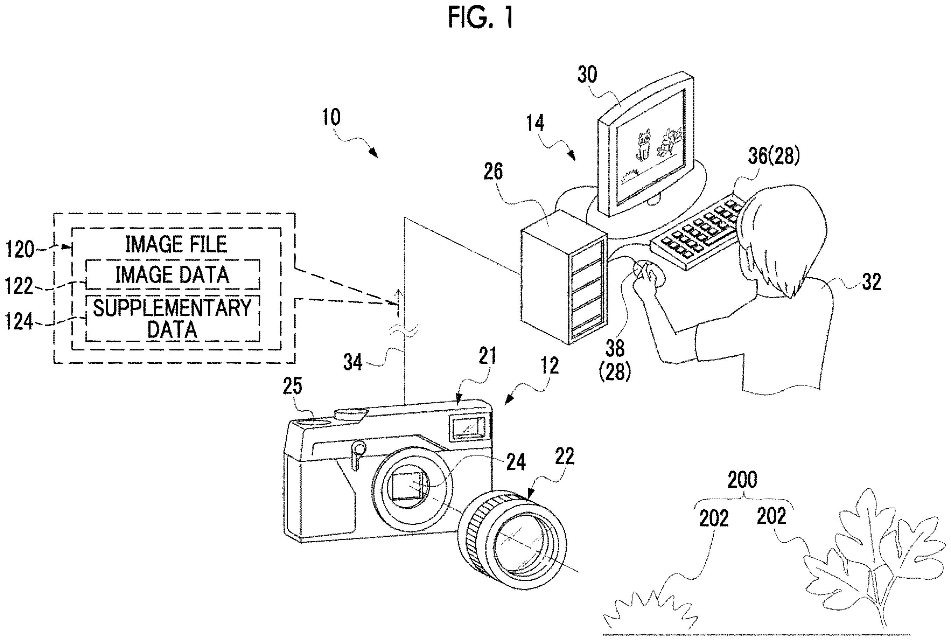

As an example, as shown in Fig. 1, an information processing system 10 comprises an imaging apparatus 12 and an information processing apparatus 14. The imaging apparatus 12 and the information processing apparatus 14 are communicatively connected to each other. The imaging apparatus 12 is an example of a "generation apparatus" according to the technology of the present disclosure.

The imaging apparatus 12 generates an image file 120, and transmits the generated image file 120 to the information processing apparatus 14. An example of the use of the image file 120 is machine learning. Machine learning is executed by the information processing apparatus 14, for example. As will be described in detail later, the image file 120 comprises image data 122 and supplementary data 124. The supplementary data 124 is data attached to the image data 122. The data attached to the image data 122 refers to, for example, metadata regarding the image data 122. The image file 120 is an example of an "image file" according to the technology of the present disclosure. The image data 122 is an example of "image data" according to the technology of the present disclosure. The supplementary data 124 is an example of "supplementary data" according to the technology of the present disclosure.

The imaging apparatus 12 comprises an imaging apparatus main body 21 and an interchangeable lens 22. The interchangeable lens 22 is interchangeably mounted on the imaging apparatus main body 21. In the example shown in Fig. 1, a lens-interchangeable digital camera is shown as an example of the imaging apparatus 12. However, this is merely an example, and the imaging apparatus 12 may be a fixed lens digital camera, or may be a digital camera installed in various electronic apparatuses such as a smart device, a wearable terminal, a cell observation apparatus, an ophthalmological observation apparatus, or a surgical microscope.

The imaging apparatus main body 21 is provided with an image sensor 24. The image sensor 24 is an example of an "image sensor" according to the technology of the present disclosure. The image sensor 24 is, for example, a complementary metal oxide semiconductor (CMOS) image sensor.

A release button 25 is provided on the upper surface of the imaging apparatus main body 21. In a case in which the release button 25 is operated by a user, the image sensor 24 images an imaging range including a subject 200. In the example shown in Fig. 1, a subject that includes different types of grass 202 is shown as an example of the subject 200.

In the present embodiment, the CMOS image sensor is exemplified as the image sensor 24, but the technology of the present disclosure is not limited thereto, and for example, the technology of the present disclosure is established even in a case in which the image sensor 24 is another type of image sensor, such as a charge coupled device (CCD) image sensor.

The information processing apparatus 14 is an apparatus used for machine learning. The information processing apparatus 14 comprises a computer 26, a reception device 28, and a display 30, and is used by an annotator 32. The annotator 32 refers to a worker who adds annotations for machine learning to given data (that is, a worker who performs labeling).

The imaging apparatus main body 21 is communicatively connected to the computer 26. In the example shown in Fig. 1, the imaging apparatus main body 21 and the computer 26 are connected via a communication cable 34. Note that although the example shown in Fig. 1 shows a form example in which the imaging apparatus main body 21 and the computer 26 are connected by wire, the technology of the present disclosure is not limited thereto, and the connection between the imaging apparatus main body 21 and the computer 26 may be a wireless connection. The reception device 28 is connected to the computer 26. The reception device 28 includes a keyboard 36, a mouse 38, and the like, and receives instructions from the annotator 32.

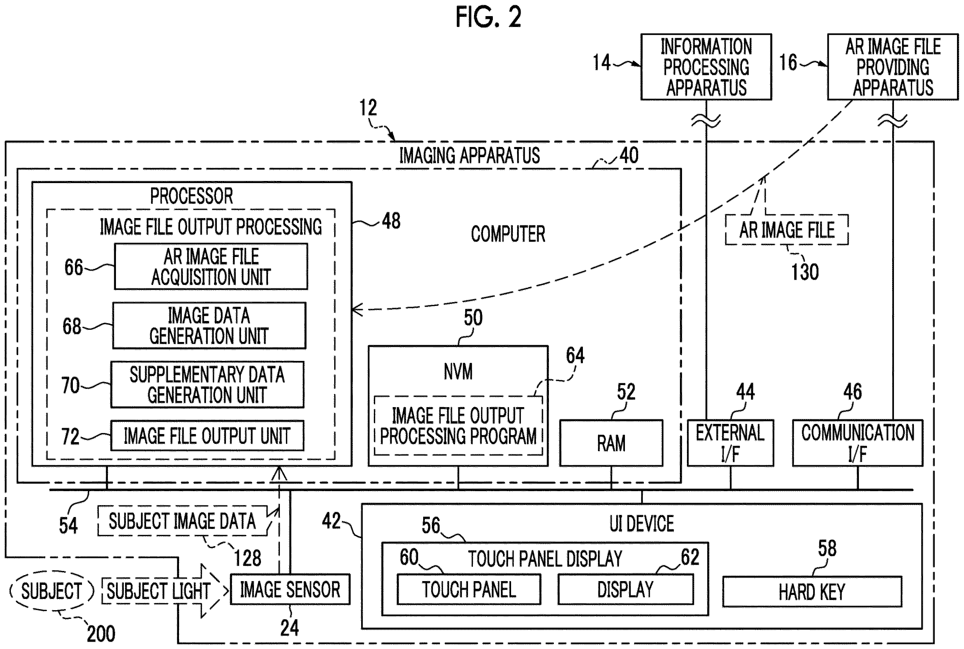

As an example, as shown in Fig. 2, the imaging apparatus 12 comprises, in addition to the image sensor 24, a computer 40, a user interface (UI) device 42, an external interface (I/F) 44, and a communication I/F 46.

The computer 40 comprises a processor 48, a non-volatile memory (NVM) 50, and a random-access memory (RAM) 52. The processor 48, the NVM 50, and the RAM 52 are connected to a bus 54. Further, the image sensor 24, the UI device 42, the external I/F 44, and the communication I/F 46 are also connected to the bus 54.

The processor 48 controls the entire imaging apparatus 12. The processor 48 is, for example, a processing apparatus including a central processing unit (CPU) and a graphics processing unit (GPU), and the GPU operates under the control of the CPU and is responsible for executing processing regarding an image. Here, a processing apparatus including the CPU and the GPU is described as an example of the processor 48, but this is merely an example, and the processor 48 may be one or more CPUs into which a GPU function is integrated, or may be one or more CPUs into which a GPU function is not integrated.

The NVM 50 is a non-volatile storage device that stores various programs, various parameters, and the like. Examples of the NVM 50 include a flash memory (for example, an electrically erasable and programmable read-only memory (EEPROM) or a solid-state drive (SSD)). The RAM 52 is a memory in which information is temporarily stored, and is used by the processor 48 as a work memory. Examples of the RAM 52 include a dynamic random-access memory (DRAM) and a static random-access memory (SRAM).

The UI device 42 comprises a touch panel display 56 and a hard key 58. The touch panel display 56 comprises a touch panel 60 and a display 62. The touch panel 60 is overlapped with the display 62. The hard key 58 includes, for example, the release button 25 (see Fig. 1), a menu selection key (not shown), and the like.

The image sensor 24 captures an image of the subject 200 by receiving subject light that is reflected light from the subject 200 and performing photoelectric conversion under the control of the processor 48. The image sensor 24 generates subject image data 128, which is image data representing the subject 200, by capturing an image of the subject 200, and outputs the generated subject image data 128.

The external I/F 44 controls exchange of various types of information between a device existing outside the imaging apparatus 12 (hereinafter also referred to as an "external device") and the processor 48. Examples of the external I/F 44 include a universal serial bus (USB) interface. For example, the information processing apparatus 14 is connected to the external I/F 44 as an external device.

The communication I/F 46 is communicatively connected to an AR image file providing apparatus 16. The AR image file providing apparatus 16 provides an augmented reality (AR) image file 130 to other apparatuses (for example, the imaging apparatus 12 or the like). The AR image file 130 will be detailed later. The communication I/F 46 may be communicatively connected to a plurality of AR image file providing apparatuses 16 using a predetermined wireless communication standard, or may be communicatively connected to the AR image file providing apparatus 16 using a predetermined wired communication standard. Examples of the predetermined wireless communication standard include Bluetooth (registered trademark). Note that other wireless communication standards (for example, Wi-Fi, 5G, or the like) may be used.

The communication I/F 46 controls exchange of information with the AR image file providing apparatus 16. For example, the communication I/F 46 transmits transmission request information for requesting transmission of the AR image file 130 from the processor 48 to the AR image file providing apparatus 16. The AR image file providing apparatus 16 transmits the AR image file 130 to the imaging apparatus 12 in response to the transmission request information transmitted from the communication I/F 46. The communication I/F 46 receives the AR image file 130 transmitted from the AR image file providing apparatus 16, and outputs the received AR image file 130 to the processor 48 via the bus 54.

The NVM 50 stores an image file output processing program 64. The processor 48 reads out the image file output processing program 64 from the NVM 50 and executes the read-out image file output processing program 64 on the RAM 52. The processor 48 performs image file output processing by operating as an AR image file acquisition unit 66, an image data generation unit 68, a supplementary data generation unit 70, and an image file output unit 72 according to the image file output processing program 64 executed on the RAM 52.

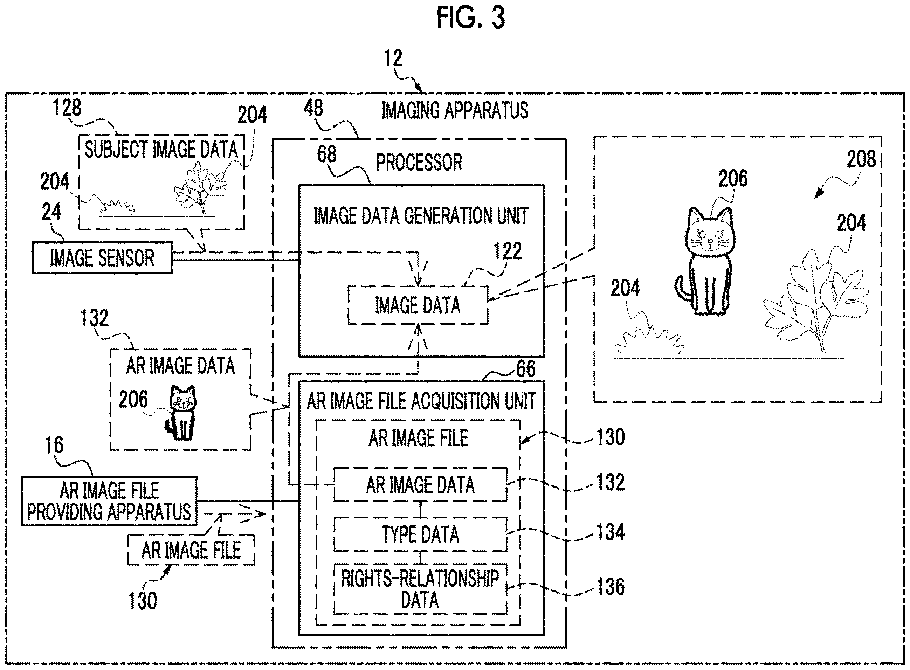

As an example, as shown in Fig. 3, the AR image file acquisition unit 66 acquires an AR image file 130 from the AR image file providing apparatus 16. The AR image file 130 includes, for example, AR image data 132, type data 134, and rights-relationship data 136. The type data 134 is an example of "type data" according to the technology of the present disclosure. The rights-relationship data 136 is an example of "rights-relationship data" according to the technology of the present disclosure.

The AR image data 132 is image data that includes an AR image 206. The AR image 206 is also referred to as an augmented reality image. The AR image 206 is an example of an "artificial image" according to the technology of the present disclosure. Note that in the present embodiment, the "image" refers to, for example, an electronic image. The AR image 206 is an image expressed by visually augmenting reality. The AR image 206 is created using, for example, computer graphics (CG), animation, or the like. The AR image 206 may be an AR stamp, for example. In the example shown in Fig. 3, the AR image 206 is an image showing a cat character created by CG Hereinafter, as an example, an example in which the AR image 206 is an image showing a cat character created by CG will be described.

The type data 134 and the rights-relationship data 136 are data associated with the AR image data 132. The type data 134 is data regarding the type of the AR image 206. An example of data regarding the type is an identifier that specifies the type. The type of the AR image 206 refers to division based on the type of the AR image 206. For example, the AR image 206 may be divided by a background or an object, or may be divided by a specific type of the background or object. For example, in a case in which the AR image 206 is an image showing a cat character, the type of the AR image 206 is cat.

The rights-relationship data 136 is data regarding the rights of the AR image 206. An example of data regarding rights is an identifier that specifies the rights assigned to the AR image 206. The rights of the AR image 206 refer to legal rights set for the AR image 206. For example, legal rights set for the AR image 206 include copyright, patent rights, design rights, trademark rights, and license free rights (for example, open copyrights, open patent rights, open design rights, and open trademark rights).

The image data generation unit 68 generates the image data 122. Specifically, the image data generation unit 68 acquires the subject image data 128 input from the image sensor 24. The subject image data 128 is image data that includes a subject image 204 obtained by capturing an image of the subject 200 by the image sensor 24. Further, the image data generation unit 68 acquires the AR image data 132 from the AR image file 130 acquired by the AR image file acquisition unit 66. Then, the image data generation unit 68 generates the image data 122 representing the image 208 based on the subject image data 128 and the AR image data 132.

The image 208 is an image that includes the subject image 204 and the AR image 206. In the example shown in Fig. 3, as an example of the image 208, an image in which the subject image 204 and the AR image 206 are integrated, that is, an image in which the subject image 204 and the AR image 206 are combined, is shown. The subject image 204 is an example of a "subject image" according to the technology of the present disclosure.

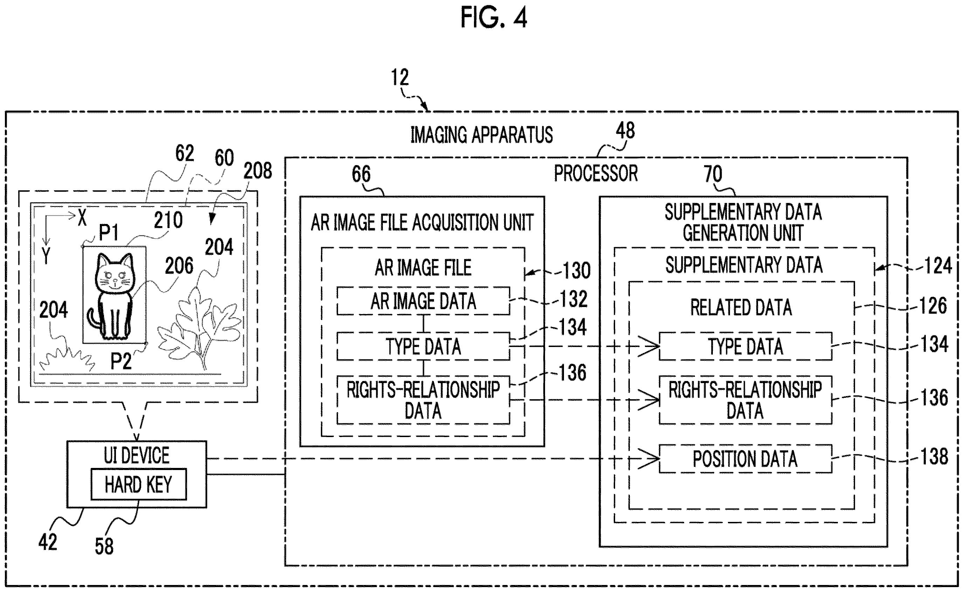

As an example, as shown in Fig. 4, the supplementary data generation unit 70 generates supplementary data 124. The supplementary data 124 includes related data 126. The related data 126 is data related to the AR image 206. The related data 126 includes, for example, the type data 134, the rights-relationship data 136, and position data 138. The related data 126 is an example of "related data" according to the technology of the present disclosure. The position data 138 is an example of "position data" according to the technology of the present disclosure.

In order to generate the related data 126 to be included in the supplementary data 124, the supplementary data generation unit 70 acquires the type data 134 and the rights-relationship data 136 included in the AR image file 130 acquired by the AR image file acquisition unit 66. Further, the supplementary data generation unit 70 acquires the position data 138 input from the UI device 42 in order to generate the related data 126 to be included in the supplementary data 124.

The position data 138 is data regarding the position of the AR image 206. Specifically, the position data 138 is data indicating a relative position of the AR image 206 with respect to the image 208. The relative position of the AR image 206 with respect to the image 208 is specified, for example, by the user designating the position of the AR image 206 via the touch panel 60 in a state in which the image 208 is displayed on the display 62. The position of the AR image 206 is specified based on coordinates of the touch panel 60 in an X direction and a Y direction. The position of the AR image 206 is designated, for example, by the user designating two points (for example, a first point P1 and a second point P2) on a diagonal line of a rectangular region 210 surrounding the AR image 206 on the touch panel 60.

The rectangular region 210 surrounding the AR image 206 is displayed on the display 62, for example, in a manner superimposed on the image 208 as a bounding box. Note that the position of the AR image 206 may be designated by the user designating one point of two points on the diagonal line of the rectangular region 210 surrounding the AR image 206 on the touch panel 60 and inputting distances in the X direction and the Y direction from the designated one point to the hard key 58. Further, although a form example in which the rectangular region 210 is displayed on the display 62 is given here, this is merely an example, and the rectangular region 210 may not be displayed on the display 62.

Then, the supplementary data generation unit 70 generates the related data 126 including the type data 134, the rights-relationship data 136, and the position data 138 acquired in the above manner.

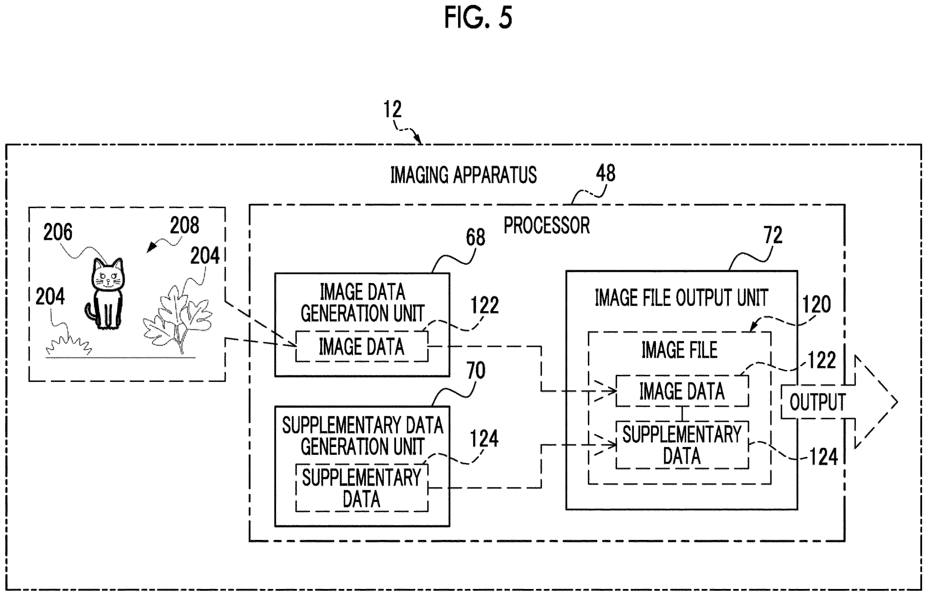

As an example, as shown in Fig. 5, the image file output unit 72 acquires image data 122 from the image data generation unit 68 and acquires supplementary data 124 from the supplementary data generation unit 70. The image file output unit 72 generates the image file 120 comprising the acquired image data 122 and supplementary data 124. The image data 122 and the supplementary data 124 may have different data structures in different hierarchies, the supplementary data 124 may be embedded in the image data 122, and it is sufficient that the supplementary data 124 is attached to the image data 122. The image file output unit 72 outputs the generated image file 120. The output destination is, for example, the information processing apparatus 14 (see Figs. 1, 2, 7, and 8).

The image file 120 may be a still image file or a video image file. In a case in which the image file 120 is a video image file, the image file 120 includes a plurality of pieces of image data 122. Each of the plurality of pieces of image data 122 constitutes a frame. In a case in which the image file 120 is a video image file, the supplementary data 124 may be associated with each of the plurality of pieces of image data 122, and the supplementary data 124 may be associated only with some pieces of the image data 122 among the plurality of pieces of image data 122. Some pieces of the image data 122 with which the supplementary data 124 is associated among the plurality of pieces of image data 122 may be designated by the user or may be selected by the imaging apparatus 12.

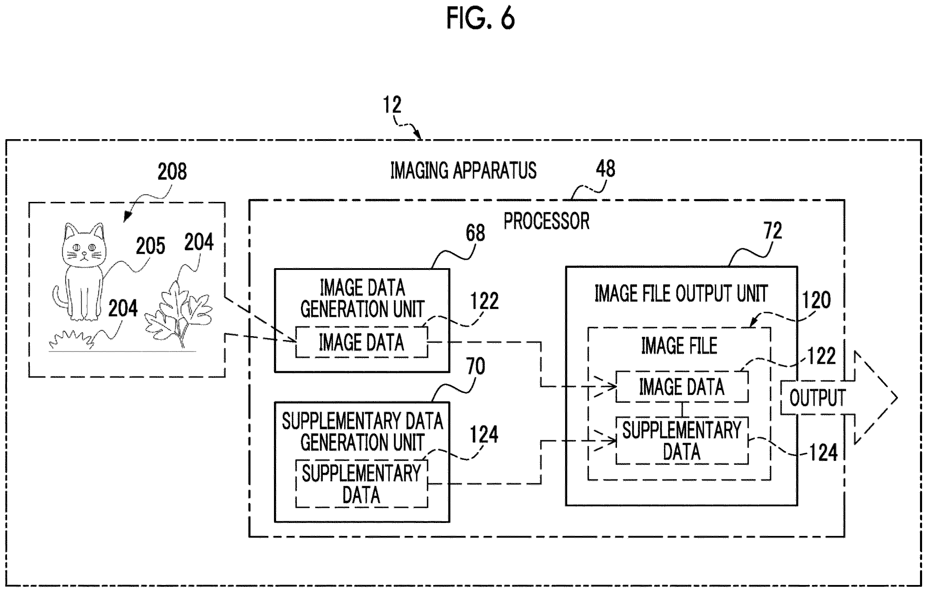

As an example, as shown in Fig. 6, the image data generation unit 68 further generates image data 122 that does not include the AR image 206 (see Fig. 5). That is, the image data generation unit 68 also generates the image data 122 that includes the subject image 205. In this case, the image data 122 generated by the image data generation unit 68 is image data including an image 208 (for example, an image including the subject images 204 and 205) in which only a real subject (that is, a subject existing in real space) is captured. In the example shown in Fig. 6, an image showing a real cat is exemplified as the subject image 205. Note that in the present embodiment, for convenience of description, although a form example in which the image data generation unit 68 generates the image data 122 that does not include the AR image 206 has been described, this is merely an example, and only the image data 122 including the AR image 206 may be generated by the image data generation unit 68.

Further, the supplementary data generation unit 70 further generates the supplementary data 124 to be attached to the image data 122 including the subject image 205. The supplementary data 124 in this case is, for example, data indicating that the image data 122 includes only the subject images 204 and 205. Note that this is merely an example, and the supplementary data 124 may be data indicating that the image data 122 does not include the AR image 206.

Further, although not particularly shown, the image data generation unit 68 may generate the image data 122 including the subject image 204 without including the AR image 206 and the subject image 205. In addition, the supplementary data generation unit 70 may generate the supplementary data 124 to be attached to the image data 122 that does not include the AR image 206 and the subject image 205. In this case, the supplementary data 124 may be, for example, data indicating that the image data 122 includes only the subject image 204 or may be data indicating that the image data 122 does not include the AR image 206 and the subject image 205.

Also in the example shown in Fig. 6, the image file output unit 72 generates the image file 120 comprising the image data 122 and the supplementary data 124 in the same manner as in the example shown in Fig. 5, and outputs the generated image file 120.

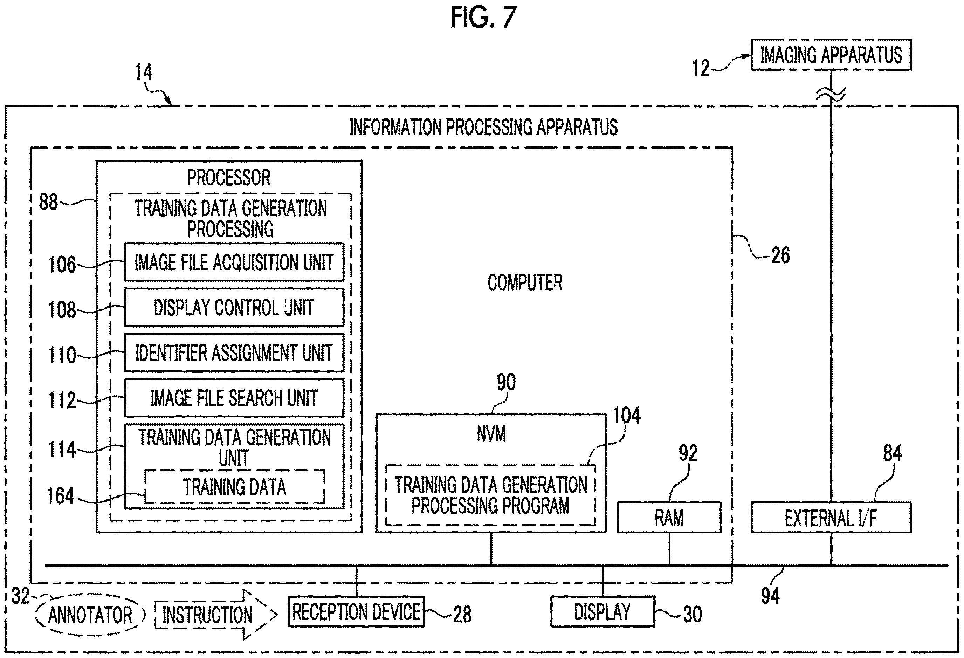

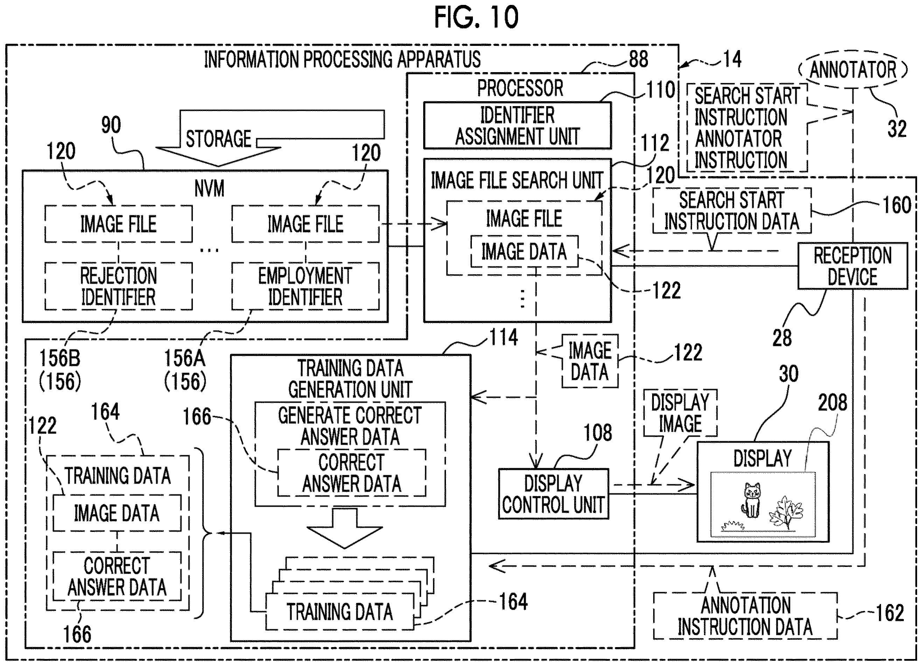

As will be described in detail later, the image file 120 generated in the above manner is used, for example, to create training data (training data 164 shown in Figs. 7 and 10 as an example) for constructing a trained model for discriminating whether or not an image includes a cat among the plurality of images 208.

As an example, as shown in Fig. 7, the information processing apparatus 14 comprises a computer 26, a reception device 28, a display 30, and an external I/F 84.

The computer 26 comprises a processor 88, an NVM 90, and a RAM 92. The processor 88, the NVM 90, and the RAM 92 are connected to a bus 94. Further, the reception device 28, the display 30, and the external I/F 84 are also connected to the bus 94.

The processor 88 controls the entire information processing apparatus 14. The processor 88, the NVM 90, and the RAM 92 are hardware resources similar to the above-described processor 48, NVM 50, and RAM 52 (see Fig. 2).

The reception device 28 receives instructions from the annotator 32. The processor 88 operates in accordance with instructions received by the reception device 28. The external I/F 84 is a hardware resource similar to the above-described external I/F 44 (see Fig. 2). The external I/F 84 is connected to the external I/F 44 of the imaging apparatus 12, and controls exchange of various types of information between the imaging apparatus 12 and the processor 88.

A training data generation processing program 104 is stored in the NVM 90. The processor 88 reads out the training data generation processing program 104 from the NVM 90 and executes the read-out training data generation processing program 104 on the RAM 92. The processor 88 performs training data generation processing according to the training data generation processing program 104 executed on the RAM 92. The training data generation processing is implemented by the processor 88 operating as an image file acquisition unit 106, a display control unit 108, an identifier assignment unit 110, an image file search unit 112, and a training data generation unit 114 according to the training data generation processing program 104.

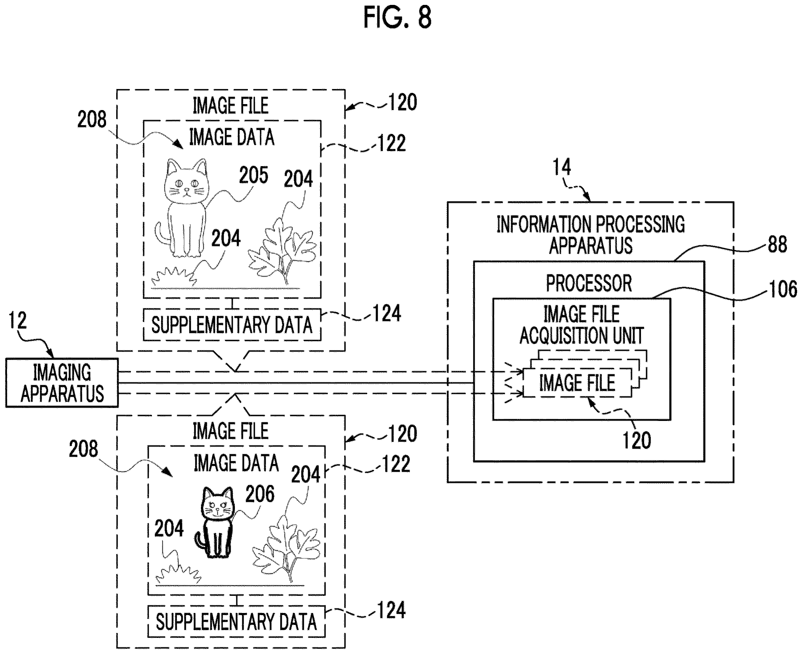

As an example, as shown in Fig. 8, the image file acquisition unit 106 acquires a plurality of image files 120 from the imaging apparatus 12. The plurality of image files 120 comprise an image file 120 (see also Fig. 5) that includes image data 122 including an AR image 206 and a subject image 204, and supplementary data 124.

The plurality of image files 120 also include an image file 120 (see also Fig. 6) that comprises supplementary data 124 and image data 122 including subject images 204 and 205 without including the AR image 206. Further, although not particularly shown, the plurality of image files 120 also include an image file 120 that comprises supplementary data 124 and image data 122 including the subject image 204 without including the AR image 206 and the subject image 205.

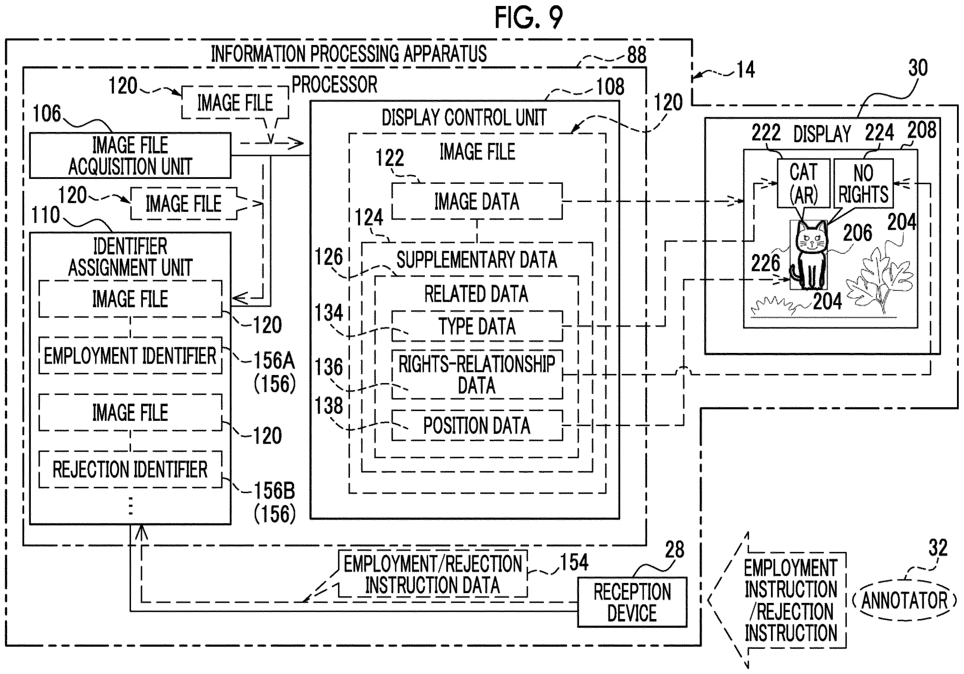

As an example, as shown in Fig. 9, the display control unit 108 causes the display 30 to display content of the image file 120 acquired by the image file acquisition unit 106. Specifically, the display control unit 108 causes the display 30 to display the image 208 indicated by the image data 122 included in the image file 120. In the example shown in Fig. 9, an image 208 including an AR image 206 and a subject image 204 is displayed on the display 30. Furthermore, the display control unit 108 causes the display 30 to display various types of information regarding the image 208 in a manner superimposed on the image 208 based on the supplementary data 124 included in the image file 120.

For example, the display control unit 108 causes the display 30 to display type information 222 indicating the type of the AR image 206 based on the type data 134. Further, for example, the display control unit 108 causes the display 30 to display rights information 224 regarding the rights of the AR image 206 based on the rights-relationship data 136. Further, for example, the display control unit 108 causes the display 30 to display position information 226 indicating the position of the AR image 206 based on the position data 138.

In the example shown in Fig. 9, the type information 222 is the characters "cat (AR)" indicating that the type of the AR image 206 is a cat, the rights information 224 is the characters "no rights" indicating that there is no right to the AR image 206, and the position information 226 is a frame surrounding the AR image 206.

Note that in the example shown in Fig. 9, the image 208 including the AR image 206 and the subject image 204 is displayed on the display 30, but in a case in which the image data 122 is data that includes subject images 204 and 205 without including the AR image 206 (see Fig. 6), the image 208 (see Fig. 6) including subject images 204 and 205 is displayed on the display 30 (not shown). Further, even in a case in which the image data 122 is data that includes the subject images 204 and 205 without including the AR image 206, various types of information (for example, information indicating that only the subject images 204 and 205 are included, or information indicating that the AR image 206 is not included) is displayed on the display 30 based on the supplementary data 124 attached to the image data 122 (not shown). In a case in which information about a real subject is stored in the supplementary data 124, the display control unit 108 may cause the display 30 to display characters indicating the type of the real subject.

Furthermore, in a case in which the image data 122 is data that includes the subject image 204 without including the AR image 206 and the subject image 205, an image 208 that includes the subject image 204 is displayed on the display 30 (not shown). Further, even in a case in which the image data 122 is data that includes the subject image 204 without including the AR image 206 and the subject image 205, various types of information (for example, information indicating that only the subject image 204 is included, or information indicating that the AR image 206 and the subject image 205 are not included) is displayed on the display 30 based on the supplementary data 124 attached to the image data 122 (not shown).

The annotator 32 refers to the content of the image file 120 displayed on the display 30 and decides whether or not to use the image 208 (that is, whether to employ the image 208) to create training data 164, which will be described later. For example, in a case in which the annotator 32 refers to the content of the image file 120 displayed on the display 30 and determines that the image 208 is suitable for the training data 164, the annotator 32 decides to employ the image 208. On the other hand, in a case in which the annotator 32 refers to the content of the image file 120 displayed on the display 30 and determines that the image 208 is not suitable for the training data 164, the annotator 32 decides not to employ the image 208.

For example, in a case in which the type of the AR image 206 indicated by the type data 134 is a cat, the annotator 32 decides to employ the image 208 because the image 208 is suitable for the training data 164. Further, for example, in a case in which machine learning is restricted by the rights of the AR image 206 indicated by the rights-relationship data 136, the annotator 32 decides not to employ the image 208 because the image 208 is not suitable for the training data 164.

Further, for example, in a case in which the image 208 includes the real subject image 205, the annotator 32 decides to employ the image 208 because the image 208 is suitable for the training data 164 as an image including a cat. Further, for example, in a case in which the image 208 includes the subject image 204 without including the AR image 206 and the subject image 205, the annotator 32 decides to employ the image 208 because the image 208 is suitable for the training data 164 as an image that does not include a cat. Note that the annotator 32 may decide to employ the image 208 in a case in which the AR image 206 included in the image 208 for which machine learning is restricted is deleted from the image 208.

In a case in which the annotator 32 decides to employ the image 208, the annotator 32 gives an employment instruction to the reception device 28. On the other hand, in a case in which the annotator 32 decides not to employ the image 208, the annotator 32 gives a rejection instruction to the reception device 28. The reception device 28 outputs employment/rejection instruction data 154 in response to an employment instruction or a rejection instruction from the annotator 32. That is, in a case in which the employment instruction from the annotator 32 is received, the reception device 28 outputs the employment/rejection instruction data 154 indicating the employment instruction, and in a case in which the rejection instruction from the annotator 32 is received, the reception device 28 outputs the employment/rejection instruction data 154 indicating the rejection instruction.

In a case in which the employment/rejection instruction data 154 indicating the employment instruction is input from the reception device 28, the identifier assignment unit 110 assigns an employment identifier 156A to the image file 120 acquired by the image file acquisition unit 106. On the other hand, in a case in which the employment/rejection instruction data 154 indicating the rejection instruction is input from the reception device 28, the identifier assignment unit 110 assigns a rejection identifier 156B to the image file 120 acquired by the image file acquisition unit 106. Note that, hereinafter, in a case in which the employment identifier 156A and the rejection identifier 156B are not distinguished from each other, the employment identifier 156A and the rejection identifier 156B will be referred to as the identifier 156.

As an example, as shown in Fig. 10, the image file 120 to which the employment identifier 156A or the rejection identifier 156B has been assigned by the identifier assignment unit 110 is stored in the NVM 90.

The annotator 32 gives a search start instruction to the reception device 28. The search start instruction includes conditions for searching for the image file 120 (hereinafter also referred to as "search conditions") and an instruction to start the search. In a case in which the search start instruction is received from the annotator 32, the reception device 28 outputs search start instruction data 160 indicating the search start instruction.

The image file search unit 112 searches for an image file 120 corresponding to the search condition from among the plurality of image files 120 stored in the NVM 90 based on the search start instruction data 160 input from the reception device 28. Hereinafter, as an example, an example will be described in which the search condition is a condition to search for the image file 120 to which the employment identifier 156A has been assigned. In this case, the image file 120 to which the employment identifier 156A has been assigned is searched from among the plurality of image files 120 stored in the NVM 90.

Note that the search conditions may be conditions other than the condition to search for the image file 120 to which the employment identifier 156A has been assigned. Further, in addition to being executed by the image file search unit 112, the search for the image file 120 (that is, the process of searching for and acquiring the image file 120 from the NVM 90) may be executed by the processor 88 according to an instruction given via the reception device 28 from the annotator 32 who has referred to the image 208 displayed on the display 30.

The display control unit 108 causes the display 30 to display the image 208 indicated by the image data 122 included in the image file 120 searched by the image file search unit 112. The annotator 32 refers to the image 208 displayed on the display 30 and gives an instruction to add an annotation to the image data 122 (hereinafter also referred to as an "annotation instruction") to the processor 88 via the reception device 28.

An annotation is a tag added to the image data 122. The tag is, for example, information indicating the characteristics of the AR image 206 within the image 208. For example, in a case in which the image 208 includes the AR image 206, the tag includes information indicating the position of the AR image 206 (for example, coordinates), information indicating the aspect of the AR image 206 (for example, color), information indicating the name of the AR image 206, and the like. Further, for example, in a case in which the image 208 includes the subject image 205 (for example, an image in which a real cat is captured), the tag includes information indicating the position of the subject image 205, information indicating the aspect of the subject image 205, information indicating the name of the subject image 205, and the like. Further, in a case in which the image 208 does not include the AR image 206 or the subject image 205, the tag includes information indicating that the image 208 does not include the AR image 206 or the subject image 205. In a case in which the annotation instruction is received from the annotator 32, the reception device 28 outputs annotation instruction data 162 indicating the annotation instruction.

The training data generation unit 114 generates training data 164 for machine learning. The training data generation unit 114 acquires image data 122 (that is, image data 122 including the image 208 displayed on the display 30) from the image file 120 searched by the image file search unit 112. The training data generation unit 114 generates correct answer data 166 based on the image data 122 acquired from the image file 120 and the annotation instruction data 162 input from the reception device 28. That is, the training data generation unit 114 generates correct answer data 166 by adding tags to the image data 122 acquired from the image file 120 according to the annotation instruction data 162.

Then, the training data generation unit 114 generates the training data 164 by associating the image data 122 used to generate the correct answer data 166 (that is, the image data 122 before the tag is added) and the correct answer data 166 with each other. The training data 164 is an example of "training data" according to the technology of the present disclosure. In the manner described above, the training data 164 for constructing a trained model for discriminating whether or not an image includes a cat is generated for the plurality of images 208.

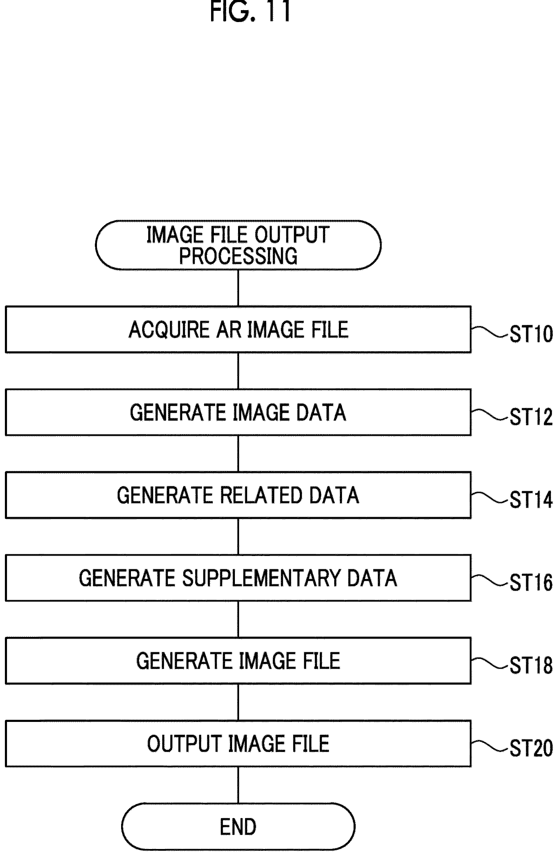

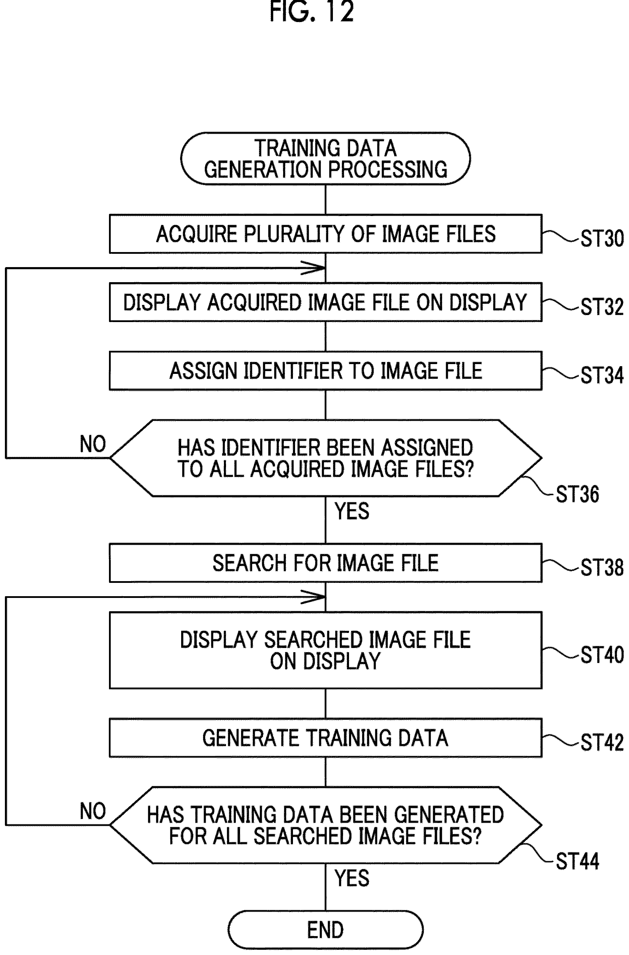

Next, the operation of the information processing system 10 will be described with reference to Figs. 11 and 12.

First, an example of a flow of image file output processing executed by the processor 48 of the imaging apparatus 12 will be described with reference to Fig. 11.

In the image file output processing shown in Fig. 11, first, in Step ST10, the AR image file acquisition unit 66 acquires the AR image file 130 provided from the AR image file providing apparatus 16 (see Fig. 3). After the processing of Step ST10 is executed, the image file output processing proceeds to Step ST12.

In Step ST12, the image data generation unit 68 generates the image data 122. Specifically, the image data generation unit 68 acquires the subject image data 128 including the subject image 204 obtained by capturing an image of the subject 200 by the image sensor 24 (see Fig. 3). The image data generation unit 68 also acquires the AR image data 132 included in the AR image file 130 acquired in Step ST10. Then, the image data generation unit 68 generates image data 122 including the subject image 204 and the AR image 206 based on the subject image data 128 and the AR image data 132 (see Fig. 3). After the processing of Step ST12 is executed, the image file output processing proceeds to Step ST14.

In Step ST14, the supplementary data generation unit 70 generates related data 126 to be included in the supplementary data 124 (see Fig. 4). The related data 126 is the type data 134, the rights-relationship data 136, and the position data 138 (see Fig. 4) associated with the image data 122 in the AR image file 130 acquired in Step ST10. After the processing of Step ST14 is executed, the image file output processing proceeds to Step ST16.

In Step ST16, the supplementary data generation unit 70 generates supplementary data 124 including the related data 126 acquired in Step ST14 (see Fig. 4). That is, the supplementary data generation unit 70 generates supplementary data 124, which is the metadata regarding the image data 122, based on the related data 126. After the processing of Step ST16 is executed, the image file output processing proceeds to Step ST 18.

In Step ST18, the image file output unit 72 generates an image file 120 comprising the image data 122 generated in Step ST12 and the supplementary data 124 generated in Step ST16 (see Fig. 5). After the processing of Step ST18 is executed, the image file output processing proceeds to Step ST20.

In Step ST20, the image file output unit 72 outputs the image file 120 generated in Step ST18 (see Fig. 5). After the processing of Step ST20 is executed, the image file output processing ends.

Note that in the image file output processing, the image file output unit 72 outputs an image file 120 that comprises image data 122 including the subject images 204 and 205 without including the AR image 206 (see Fig. 6). Further, although not particularly shown, the image file output unit 72 outputs an image file 120 that comprises image data 122 including the subject image 204 without including the AR image 206 and the subject image 205.

Next, an example of a flow of training data generation processing executed by the processor 88 of the information processing apparatus 14 will be described with reference to Fig. 12.

In the training data generation processing shown in Fig. 12, first, in Step ST30, the image file acquisition unit 106 acquires the plurality of image files 120 transmitted from the imaging apparatus 12 (see Fig. 8). After the processing of Step ST30 is executed, the training data generation processing proceeds to Step ST32. Step ST30 is an example of an "acquisition step" according to the technology of the present disclosure.

Step ST30 may include search processing of the image file 120 based on content of the supplementary data 124. For example, in a case in which it is desired to acquire only the image file 120 that includes the AR image 206, the image file acquisition unit 106 may acquire only the plurality of image files 120 having the supplementary data 124 regarding the AR image 206 from the imaging apparatus 12.

In Step ST32, the display control unit 108 causes the display 30 to display any image file 120 among the plurality of image files 120 acquired in Step ST30 (see Fig. 9). After the processing of Step ST32 is executed, the training data generation processing proceeds to Step ST34.

Further, in Step ST30, the image file acquisition unit 106 may acquire the plurality of image files 120 from the imaging apparatus 12 regardless of the presence or absence of the supplementary data 124 regarding the AR image 206 from the imaging apparatus 12. Then, in Step ST32, the image file search unit 112 may transmit only the plurality of image files 120 having supplementary data 124 regarding the AR image 206 from the imaging apparatus 12 to the display control unit 108, and the display control unit 108 may cause the display 30 to display the plurality of image files 120.

In Step ST34, the identifier assignment unit 110 assigns the identifier 156 (that is, the employment identifier 156A or the rejection identifier 156B) to the image file 120 displayed on the display 30 in Step ST32 (see Fig. 9). After the processing of Step ST34 is executed, the training data generation processing proceeds to Step ST36.

In Step ST36, the processor 88 determines whether or not the identifier 156 has been assigned to all the image files 120 acquired in Step ST30. In Step ST36, in a case in which the identifier 156 has not been assigned to all the image files 120, a negative determination is made and the training data generation processing proceeds to Step ST32. In Step ST36, in a case in which the identifier has been assigned to all the image files 120, a positive determination is made and the training data generation processing proceeds to Step ST38.

In Step ST38, the image file search unit 112 searches for the image file 120 to which the employment identifier 156A has been assigned from among the plurality of image files 120 (see Fig. 10). After the processing of Step ST38 is executed, the training data generation processing proceeds to Step ST40. Step ST40 is an example of a "search step" according to the technology of the present disclosure.

In Step ST40, the display control unit 108 causes the display 30 to display the image 208 indicated by the image data 122 included in the image file 120 searched in Step ST38 (see Fig. 10). After the processing of Step ST40 is executed, the training data generation processing proceeds to Step ST42.

In Step ST42, the training data generation unit 114 generates training data 164 for machine learning (see Fig. 10). In this case, the training data generation unit 114 acquires the image data 122 (that is, the image data 122 including the image 208 displayed on the display 30 in Step ST40) from the image file 120 searched in Step ST38, and generates correct answer data 166 based on the acquired image data 122 and the annotation instruction data 162 input from the reception device 28. Then, the training data generation unit 114 generates the training data 164 by associating the correct answer data 166 with the image data 122 acquired from the image file 120 (that is, the image data 122 used to generate the correct answer data 166). After the processing of Step ST42 is executed, the training data generation processing proceeds to Step ST44. Step ST42 is an example of a "generation step" according to the technology of the present disclosure.

In Step ST44, the processor 88 determines whether or not the training data 164 has been generated for all the image files 120 searched in Step ST38. In Step ST44, in a case in which the training data 164 has not been generated for all the image files 120, a negative determination is made and the training data generation processing proceeds to Step ST40. In Step ST44, in a case in which the training data 164 has been generated for all the image files 120, a positive determination is made and the training data generation processing ends.

Note that the data processing method described as the operation of the information processing apparatus 14 described above is an example of a "data processing method" according to the technology of the present disclosure.

As described above, in the information processing system 10 according to the present embodiment, the image file 120 comprises the image data 122 and the supplementary data 124. The image data 122 includes a subject image 204 and an AR image 206, and the supplementary data 124 includes related data 126 of the AR image 206. Therefore, for example, as shown in Fig. 9, by displaying content of the related data 126 on the display 30, a user or the like (for example, the annotator 32 or the like) can distinguish between appropriate image files 120 and inappropriate image files 120 (for example, image files 120 that can be used to generate the training data 164 and image files 120 that cannot be used to generate the training data 164) while referring to content of the related data 126.

The image files 120 are stored in the NVM 90 in a state where they are distinguished into appropriate image files 120 (for example, the image file 120 attached with the employment identifier 156A) and inappropriate image files 120 (for example, the image file 120 attached with the rejection identifier 156B) (see Fig. 10). Thereby, for example, a user or the like can designate an image file 120 (for example, an appropriate image file 120) from the NVM 90 and use the designated image file 120.

Further, the image file 120 is used, for example, to generate the training data 164. For example, the user or the like can create the correct answer data 166 by labeling the image data 122 included in the designated image file 120. The training data 164 is generated by associating the correct answer data 166 with the image data 122 used to generate the correct answer data 166.

In this way, the user or the like can decide whether or not to employ the image file 120 while referring to the content of the related data 126. Therefore, the user or the like can easily decide the necessary image file 120 (here, as an example, an image file 120 including the image data 122 necessary for generating the training data 164) as compared with a case in which the related data 126 does not exist. That is, the image file 120 includes image data 122 including the subject image 204 and the AR image 206, and the supplementary data 124 associated with the image data 122, and the related data 126 included in the supplementary data 124 is referenced by the user or the like. The user or the like can give instructions to the information processing apparatus 14 or the like while referring to the related data 126. Therefore, the image file 120 can provide higher usability to the user or the like than an image file configured only of image data consisting of the subject image 204 and the AR image 206 (hereinafter, this will be referred to as a "first effect").

Further, the related data 126 includes type data 134 regarding the type of the AR image 206. On the display 30, the AR image 206 is displayed based on the image data 122 included in the image file 120, and the type information 222 is displayed based on the type data 134 included in the image file 120 (see Fig. 9). Therefore, the user or the like can decide whether or not to employ the image file 120 while referring to the type information 222 displayed on the display 30. Therefore, the user or the like can easily specify the type of the AR image 206 as compared with a case in which no information for determining the type of AR image 206 exists. As a result, the user or the like can easily decide the necessary image file 120 as compared with the case in which no information for determining the type of the AR image 206 exists.

Further, the related data 126 includes position data 138 regarding the position of the AR image 206. On the display 30, the AR image 206 is displayed based on the image data 122 included in the image file 120, and the position information 226 is displayed based on the position data 138 included in the image file 120 (see Fig. 9). Therefore, the user or the like can decide whether or not to employ the image file 120 while referring to the position information 226 displayed on the display 30. Therefore, the user or the like can easily specify the position of the AR image 206 within the image 208 as compared with a case in which there is no information for determining the position of AR image 206. As a result, the user or the like can easily decide the necessary image file 120 as compared with the case in which there is no information for determining the position of the AR image 206.

Further, the related data 126 includes rights-relationship data 136 regarding the rights of the AR image 206. On the display 30, the AR image 206 is displayed based on the image data 122 included in the image file 120, and the rights information 224 is displayed based on the rights-relationship data 136 included in the image file 120 (see Fig. 9). Therefore, the user or the like can decide whether or not to employ the image file 120 while referring to the rights information 224 displayed on the display 30. Therefore, the user or the like can easily specify the rights of the AR image 206 as compared with a case in which there is no information for determining the rights of AR image 206. As a result, the user or the like can easily decide the necessary image file 120.

In addition, the imaging apparatus 12 generates image data 122 including a subject image 204 obtained by being imaged by the image sensor 24 and an AR image 206, generates supplementary data 124 including related data 126 of the AR image 206, and generates an image file 120 comprising the image data 122 and the supplementary data 124. Therefore, according to this configuration, the same effect as the first effect is achieved.

Further, the information processing apparatus 14 acquires a plurality of image files 120 and performs a search on the plurality of image files 120. The plurality of image files 120 acquired by the information processing apparatus 14 include the above-described image file 120 comprising the image data 122 and the supplementary data 124. Therefore, according to this configuration, the same effect as the first effect is achieved. Further, the necessary image file 120 can be easily searched for compared with a case in which no data corresponding to the supplementary data 124 exists.

Further, the information processing apparatus 14 generates training data 164 for machine learning based on the image file 120 searched using the supplementary data 124 from the plurality of image files 120. Therefore, since it is possible to easily search for the necessary image file 120 as compared with a case in which no data corresponding to the supplementary data 124 exists, the training data 164 for machine learning can also be easily generated.

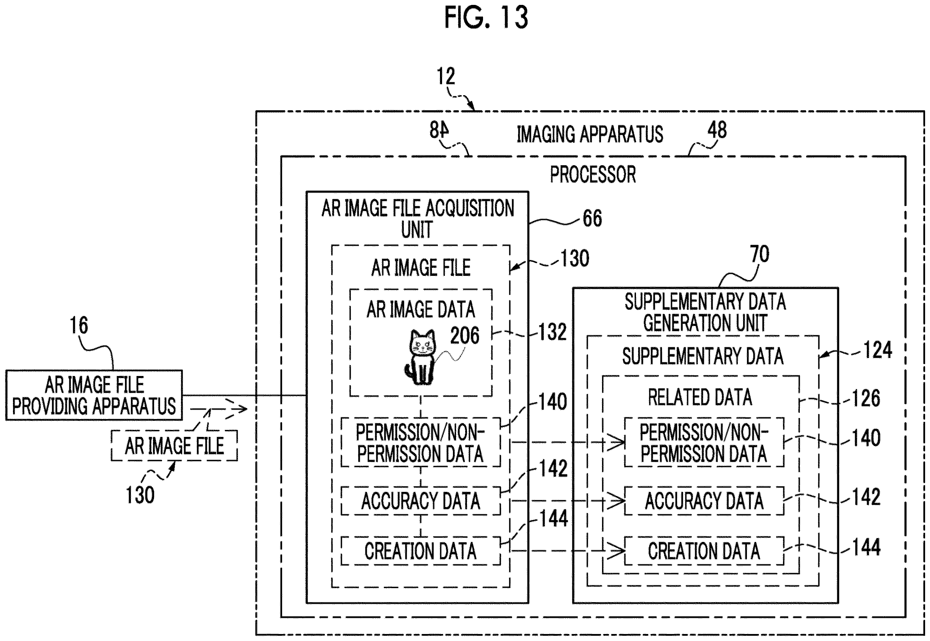

Note that in the above embodiment, as an example, as shown in Fig. 13, the AR image file 130 may include permission/non-permission data 140, accuracy data 142, and creation data 144. The permission/non-permission data 140, the accuracy data 142, and the creation data 144 are data associated with the AR image data 132. The permission/non-permission data 140 is an example of "permission/non-permission data" according to the technology of the present disclosure. The accuracy data 142 is an example of "accuracy data" according to the technology of the present disclosure. The creation data 144 is an example of "creation data" according to the technology of the present disclosure.

The permission/non-permission data 140 is data regarding permission/non-permission of machine learning using the AR image 206. An example of data regarding permission/non-permission of machine learning is data indicating whether or not to permit use of the AR image 206 for machine learning. Note that the permission/non-permission data 140 may include information other than information indicating whether machine learning is permitted or not. For example, in a case in which the permission/non-permission data 140 includes information indicating that machine learning is permitted, the permission/non-permission data 140 may include information that limits the use of the AR image 206 (for example, information that limits the use of the AR image 206 only to machine learning for game software development). In addition, in a case in which the permission/non-permission data 140 includes information indicating that machine learning is permitted, the permission/non-permission data 140 may include information regarding contact information (for example, contact information for the author of the AR image 206) necessary before executing machine learning.

The accuracy data 142 is data regarding an accuracy of the AR image 206 (hereinafter also simply referred to as an "accuracy"). An example of data regarding an accuracy is data indicating the accuracy itself. The accuracy of the AR image 206 refers to, for example, the degree of accuracy that the AR image 206 has with respect to a real image (for example, an image obtained by capturing an image of a subject in real space by the imaging apparatus 12) (that is, how much the AR image 206 matches the real image). As the AR image 206 approaches the real image, the accuracy of the AR image 206 increases. The accuracy data 142 may be generated by the AR image file providing apparatus 16 or may be generated by the imaging apparatus 12. The accuracy of the AR image 206 may be derived by comparing the AR image 206 and a real image through image processing using artificial intelligence, or may be derived by comparing the AR image 206 and a real image using a template matching method.

The creation data 144 is data regarding a creation method of the AR image 206 (hereinafter also simply referred to as a "creation method") or a creation entity of the AR image 206 (hereinafter also simply referred to as a "creation entity"). An example of data regarding the creation method or creation entity is data indicating the creation method or creation entity itself. The creation method of the AR image 206 refers to, for example, the type of method by which the AR image 206 was created. Examples of the type of method for creating the AR image 206 include a description of the characteristics of the AR image 206 such as CG or animation, or a description of the name of the application used to create the AR image 206. The creation entity of the AR image 206 refers to, for example, the specific name of the entity that created the AR image 206. The entity that created the AR image 206 may be, for example, a person, a company, or an organization that created the AR image 206.

Then, the supplementary data generation unit 70 may acquire the permission/non-permission data 140, the accuracy data 142, and the creation data 144 included in the AR image file 130 acquired by the AR image file acquisition unit 66, and include the acquired permission/non-permission data 140, accuracy data 142, and creation data 144 in the related data 126.

Further, in the information processing apparatus 14 (see Fig. 9), information indicated by the permission/non-permission data 140, the accuracy data 142, and the creation data 144 may be displayed on the display 30 (not shown).

For example, in a case in which the permission/non-permission data 140 indicates that machine learning is not permitted for the AR image 206, the annotator 32 (see Fig. 9) may decide not to employ the image 208 because the image 208 is not suitable for the training data 164. On the other hand, for example, in a case in which the permission/non-permission data 140 indicates that machine learning is not permitted for the AR image 206, the annotator 32 may decide not to employ the image 208 because the image 208 is not suitable for the training data 164.

Further, for example, in a case in which the accuracy indicated by the accuracy data 142 is equal to or greater than an accuracy preset as the limit for machine learning, the annotator 32 may decide to employ the image 208 even in a case in which the image 208 includes the AR image 206 because the image 208 is suitable for the training data 164. On the other hand, for example, in a case in which the accuracy indicated by the accuracy data 142 is equal to or greater than an accuracy preset as the limit for machine learning, the annotator 32 may decide to employ the image 208 even in a case in which the image 208 includes the AR image 206 because the image 208 is suitable for the training data 164. Note that the accuracy preset as the limit for machine learning may be a fixed value, or may be a variable value that is changed depending on an instruction given from the outside (for example, an instruction received by the reception device 28) or various conditions.

Further, for example, in a case in which machine learning is restricted due to reasons such as the generation of rights to the creation method indicated by the creation data 144, the annotator 32 may decide not to employ the image 208 because the image 208 is not suitable for the training data 164. On the other hand, for example, in a case in which machine learning is restricted due to rights held by the creation entity indicated by the creation data 144, the annotator 32 may decide not to employ the image 208 because the image 208 is not suitable for the training data 164.

As in the example shown in Fig. 13, in a case in which the related data 126 includes permission/non-permission data 140 regarding machine learning using the AR image 206, the user or the like (for example, the annotator 32 or the like) can easily specify whether or not the AR image 206 is permitted to be used for machine learning as compared with a case in which there is no information for determining whether or not the AR image 206 is permitted to be used for machine learning. As a result, the user or the like can easily decide the necessary image file 120 as compared with the case in which there is no information for determining whether or not the AR image 206 is permitted to be used for machine learning.

Further, in a case in which the related data 126 includes accuracy data 142 regarding the accuracy of the AR image 206, the user or the like can easily specify the accuracy of the AR image 206 as compared with a case in which there is no information for determining the accuracy of the AR image 206. As a result, the user or the like can easily decide the necessary image file 120 as compared with the case in which there is no information for determining the accuracy of the AR image 206.

Furthermore, in a case in which the related data 126 includes creation data 144 regarding the creation method or creation entity of the AR image 206, the user or the like can easily specify the creation method or creation entity as compared with a case in which there is no information for determining the creation method or creation entity. As a result, the user or the like can easily decide the necessary image file 120 as compared with the case in which there is no information for determining the creation method or creation entity.

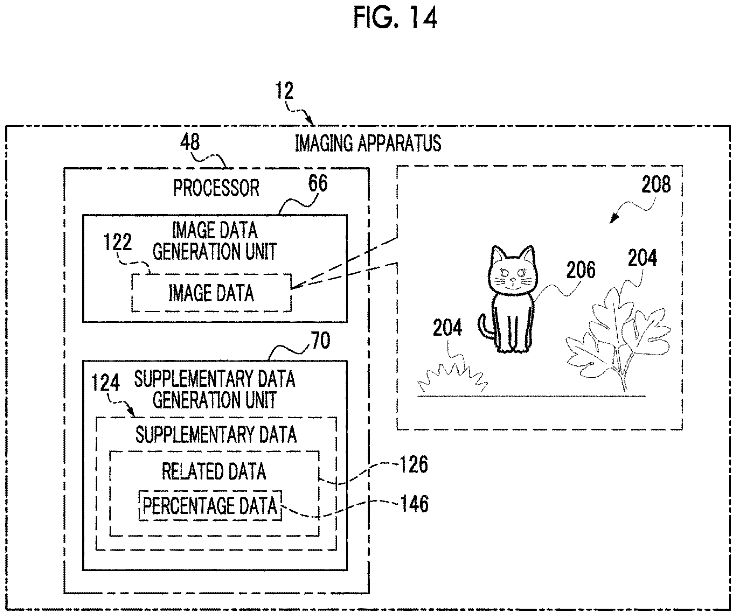

As an example, as shown in Fig. 14, the supplementary data generation unit 70 may generate percentage data 146 and include the percentage data 146 in the related data 126. The percentage data 146 is data regarding a percentage of the AR image 206 in the image 208 indicated by the image data 122 (hereinafter also simply referred to as a "percentage"). An example of data regarding a percentage is data indicating the percentage itself. The percentage data 146 is an example of "percentage data" according to the technology of the present disclosure. The percentage data 146 indicates, for example, the percentage of the area occupied by the AR image 206 to the entire image 208. The percentage of the area is calculated based on the number of pixels, for example.

Further, in the information processing apparatus 14 (see Fig. 9), information indicated by the percentage data 146 may be displayed on the display 30 (not shown).

Then, for example, in a case in which the percentage indicated by the percentage data 146 is larger than a percentage preset as a limit for machine learning, the AR image 206 may make the image 208 unrealistic, and the annotator 32 (See Fig. 9) may decide not to employ the image 208 because the image 208 is not suitable for the training data 164. Note that the percentage preset as the limit for machine learning may be a fixed value, or may be a variable value that is changed depending on an instruction given from the outside (for example, an instruction received by the reception device 28) or various conditions.

As in the example shown in Fig. 14, in a case in which the related data 126 includes percentage data 146 regarding the percentage of the AR image 206 in the image 208 indicated by the image data 122, the user or the like can easily specify the percentage of the AR image 206 in the image 208 indicated by the image data 122 as compared with a case in which there is no information for determining the percentage of the AR image 206 in the image 208 indicated by the image data 122. As a result, the user or the like can easily decide the necessary image file 120 as compared with the case in which there is no information for determining the percentage of the AR image 206 in the image 208 indicated by the image data 122.

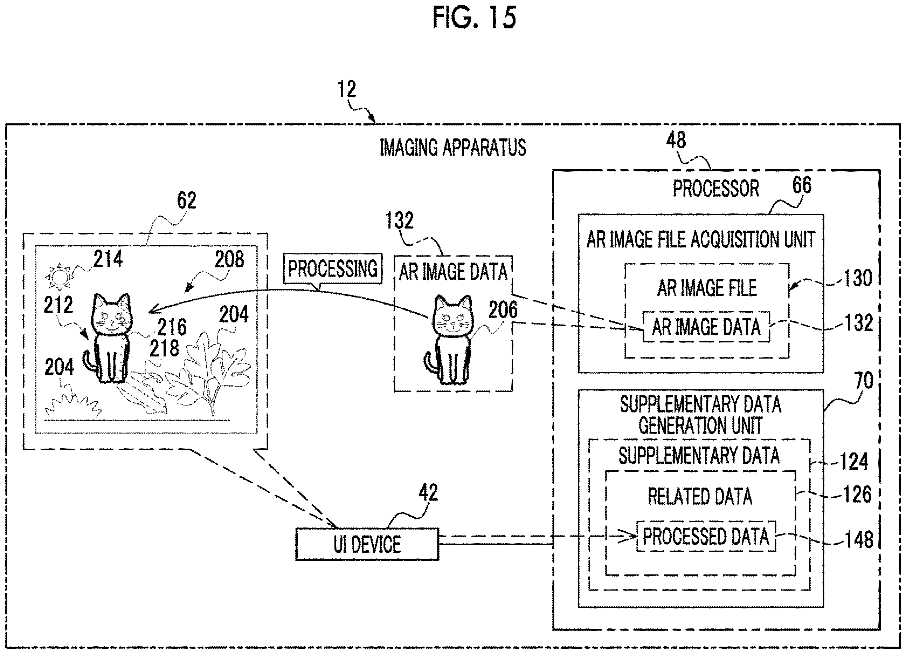

As an example, as shown in Fig. 15, the supplementary data generation unit 70 may generate processed data 148 and include the processed data 148 in the related data 126. The processed data 148 is data regarding processing information of processed image 212 (hereinafter also simply referred to as "processing information") or a rights relationship of the processed image 212 (hereinafter also simply referred to as a "rights relationship"). An example of data regarding a rights relationship is data indicating the rights relationship itself. The processed data 148 is an example of "processed data" according to the technology of the present disclosure.

For example, the processed image 212 is an image generated by processing the AR image 206. By processing the AR image 206, an image in which some or all aspects (for example, color or shape) of the AR image 206 are changed is generated as a processed image 212. For example, the imaging apparatus 12 has application software or the like for image processing installed therein. Processing of the AR image 206 is executed by application software or the like of the imaging apparatus 12 based on instructions received by the UI device 42.

In the example shown in Fig. 15, the processed image 212 is an image in which an image 216 showing a silhouette and an image 218 showing a shadow are added to the AR image 206 by application software of the imaging apparatus 12 based on the position of the sun 214 and the position of the AR image 206. This brings the AR image 206 closer to the real subject image. The processing information of the processed image 212 includes, for example, information indicating content of the processing performed on the AR image 206. The content of processing includes, for example, the processed position, the aspect after processing, the processing rate, etc.

The processing rate refers to the percentage of the area occupied by the processed region to the entire processed image 212. The percentage of the area is calculated based on the number of pixels, for example. Furthermore, the processing information of the processed image 212 may include information regarding application software used to process the AR image 206 (for example, the name or type of the application software).

The rights relationship of the processed image 212 refers to, for example, information indicating the entity to which the legal rights to the processed image 212 belong. For example, in a case in which the aspect of the processed image 212 is included in the category of the aspect of the AR image 206, the entity to which the legal rights to the processed image 212 belong may be treated as the same entity to which the legal rights to the AR image 206 belong. On the other hand, for example, in a case in which the aspect of the processed image 212 exceeds the category of the aspect of the AR image 206, the user who has processed the AR image 206 may be treated as the entity to which the legal rights to the processed image 212 belong.

Further, in the information processing apparatus 14 (see Fig. 9), information indicated by the processed data 148 may be displayed on the display 30 (not shown).

Also, for example, in a case in which machine learning is restricted due to the processing information or rights relationship indicated by the processed data 148, the annotator 32 (see Fig. 9) may decide not to employ the image 208 because the image 208 is not suitable for the training data 164. Further, the annotator 32 may decide to employ the image 208 in a case in which the AR image 206 or the processed image 212 included in the image 208 for which machine learning is restricted is deleted from the image 208.

As in the example shown in Fig. 15, in a case in which the related data 126 includes processed data 148 regarding processing information of the processed image 212 or a rights relationship of the processed image 212, the user or the like can easily specify the processing information or the rights relationship as compared with a case in which there is no information for determining the processing information or the rights relationship. As a result, the user or the like can easily decide the necessary image file 120 as compared with the case in which there is no information for determining the processing information or the rights relationship.

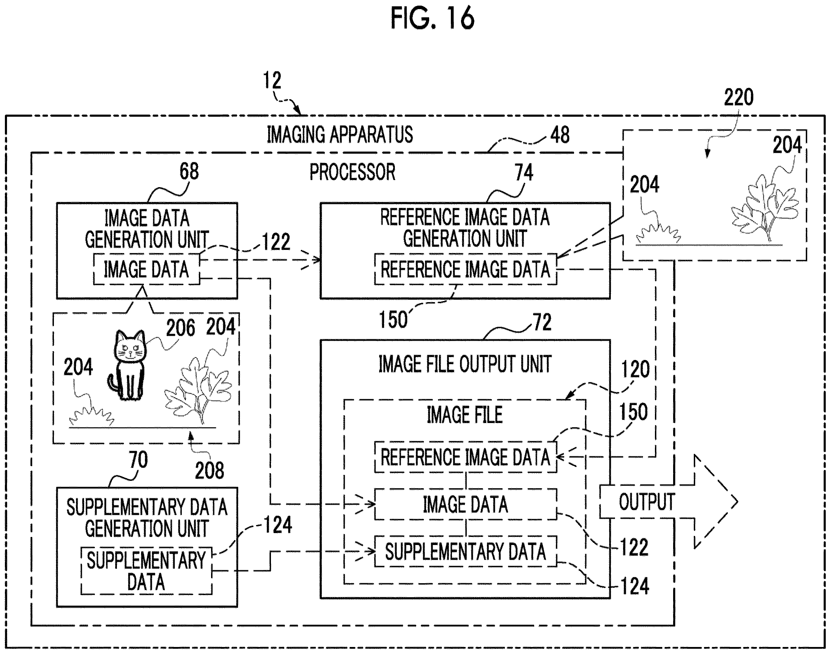

As an example, as shown in Fig. 16, the processor 48 may operate as a reference image data generation unit 74. The reference image data generation unit 74 generates reference image data 150 including a reference image 220 based on the image data 122 generated by the image data generation unit 68. The reference image 220 is an image that includes the subject image 204 without including the AR image 206.

The reference image 220 may be, for example, a thumbnail image. In a case in which the reference image 220 is a thumbnail image, the reference image data generation unit 74 extracts the subject image 204 from the image data 122, and generates the reference image data 150 by executing processing to lower the resolution of the extracted subject image 204, compression processing, or the like.

The image file output unit 72 may include the reference image data 150 in the image file 120. That is, the image file 120 may comprise the reference image data 150 in addition to the image data 122 and the supplementary data 124. The reference image data 150 is an example of "reference image data" according to the technology of the present disclosure. The reference image data 150 is associated with the image data 122 and the supplementary data 124 in the image file 120. Note that the reference image data 150 may be included in the supplementary data 124.

As in the example shown in Fig. 16, in a case in which the image file 120 further comprises reference image data 150 that includes the subject image 204 without including the AR image 206, a reference image 220 (that is, an image that includes the subject image 204 without including the AR image 206) indicated by the reference image data 150 can be displayed on the display 30. As a result, the user or the like can decide the necessary image file 120 while referring to the reference image 220 displayed on the display 30.

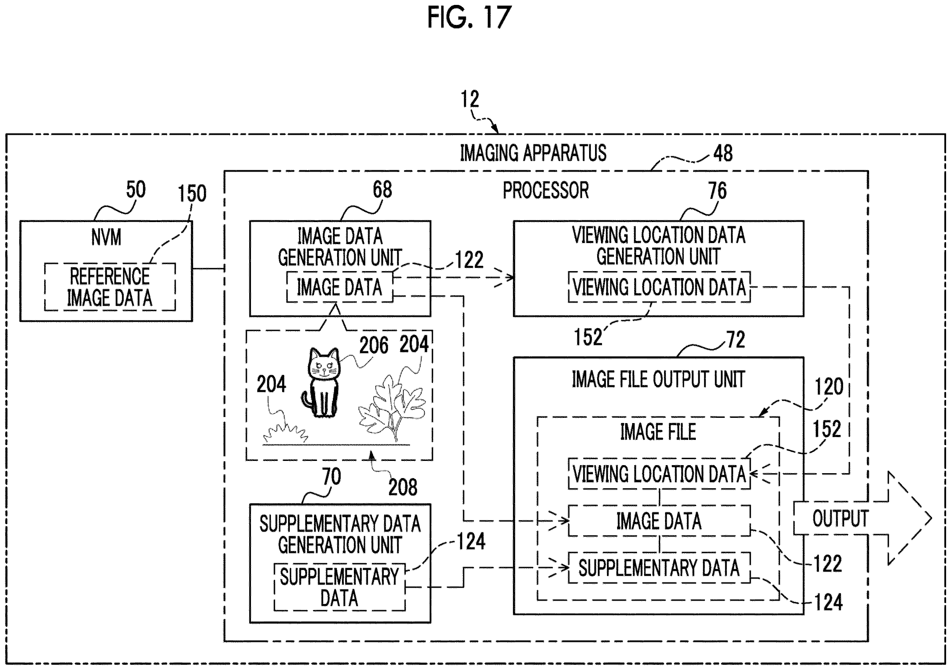

As an example, as shown in Fig. 17, the processor 48 may operate as a viewing location data generation unit 76. The viewing location data generation unit 76 generates viewing location data 152 indicating a location where the processor 48 views the reference image data 150. The viewing location data 152 is an example of "viewing location data" according to the technology of the present disclosure. The viewing location data 152 includes information that can specify the reference image data 150. Examples of the information that can specify the reference image data 150 include the file name, link destination, or identification code of the reference image data 150.

The reference image data 150 is stored, for example, in the NVM 50 of the imaging apparatus 12, a cloud storage, or the like. The location where the reference image data 150 is stored corresponds to the location where the processor 48 views the reference image data 150. In the example shown in Fig. 17, the reference image data 150 is stored in the NVM 50 of the imaging apparatus 12.

The image file output unit 72 may include the viewing location data 152 in the image file 120. That is, the image file 120 may comprise the viewing location data 152 in addition to the image data 122 and the supplementary data 124. The viewing location data 152 is associated with the image data 122 and the supplementary data 124 in the image file 120. Note that the viewing location data 152 may be included in the supplementary data 124.

As in the example shown in Fig. 17, in a case in which the supplementary data 124 includes viewing location data 152 regarding a viewing location of the reference image data 150 that includes the subject image 204 without including the AR image 206, the user or the like can easily specify the viewing location of the reference image data 150 as compared with a case in which there is no information for determining the viewing location of the reference image data 150. As a result, the reference image 220 is displayed on the display 30 quickly as compared with the case in which there is no information for determining the viewing location of the reference image data 150.

In addition, in the above embodiment, the imaging apparatus 12 generates the image data 122 including the AR image 206, but instead of the AR image 206, for example, the imaging apparatus 12 may generate image data 122 that includes an image generated by artificial intelligence or the like (for example, an image created using a generative adversarial network) or image data 122 that includes a composite image combined by artificial intelligence or the like (for example, a composite image in which an image created using a generative adversarial network and the subject image 204 or 205 are combined). In this case, an image generated by artificial intelligence or the like and a composite image combined by artificial intelligence or the like are examples of "artificial images" according to the technology of the present disclosure.

In addition to the above-exemplified type data 134, position data 138, rights-relationship data 136, permission/non-permission data 140, accuracy data 142, percentage data 146, processed data 148 or creation data 144, the related data 126 may include data related to the AR image 206 (for example, data indicating various attributes of the AR image 206).

In addition, in addition to the condition for searching for the image file 120 to which the employment identifier 156Ahas been assigned, the search condition given to the image file search unit 112 may be, for example, conditions regarding various attributes of the AR image 206 indicated by data included in the related data 126 (that is, the type data 134, the position data 138, the rights-relationship data 136, the permission/non-permission data 140, the accuracy data 142, the percentage data 146, the processed data 148, or the creation data 144).

Further, although the image file 120 is used for generating the training data 164, the image file 120 may be used for uses other than generating the training data 164. Examples of uses other than generating the training data 164 include generation of templates used in template matching, generation of sample images used in effect processing, and the like.

Further, although the image file output processing is performed by the imaging apparatus 12, a part of the image file output processing may be performed by an apparatus other than the imaging apparatus 12.

In addition, although the training data generation processing is performed by the information processing apparatus 14, a part of the training data generation processing may be performed by an apparatus other than the information processing apparatus 14.

In addition, in the embodiment, the image file output processing program 64 is stored in the NVM 50 of the imaging apparatus 12. However, the image file output processing program 64 may be stored in a portable computer-readable non-transitory storage medium, such as an SSD or USB memory. Then, the image file output processing program 64 stored in the non-transitory storage medium may be installed in the computer 40 of the imaging apparatus 12, and the processor 48 may execute image file output processing according to the image file output processing program 64.

Further, the image file output processing program 64 may be stored in a storage device such as another computer or a server device connected to the imaging apparatus 12 via a network, and the image file output processing program 64 may be downloaded in response to the request of the imaging apparatus 12 and installed on the computer 40.

Further, it is not necessary to store the entire image file output processing program 64 in a storage device such as another computer or a server device connected to the imaging apparatus 12, or in the NVM 90, and a part of the image file output processing program 64 may be stored.

Although the computer 40 is built in the imaging apparatus 12, the computer 40 may be provided outside the imaging apparatus 12.

In addition, the imaging apparatus 12 comprises the computer 40, but instead of the computer 40, a device including an application-specific integrated circuit (ASIC), a field-programmable gate array (FPGA), or a programmable logic device (PLD) may be applied. Also, a combination of a hardware configuration and a software configuration may be used instead of the computer 40.

In addition, in the embodiment, the training data generation processing program 104 is stored in the NVM 90 of the information processing apparatus 14. However, the training data generation processing program 104 may be stored in a portable computer-readable non-transitory storage medium, such as an SSD or USB memory. Then, the training data generation processing program 104 stored in the non-transitory storage medium may be installed in the computer 26 of the information processing apparatus 14, and the processor 88 may execute training data generation processing according to the training data generation processing program 104.

Further, the training data generation processing program 104 may be stored in a storage device such as another computer or a server device connected to the information processing apparatus 14 via a network, and the training data generation processing program 104 may be downloaded in response to the request of the information processing apparatus 14 and installed on the computer 26.

Further, it is not necessary to store the entire training data generation processing program 104 in a storage device such as another computer or a server device connected to the information processing apparatus 14, or in the NVM 90, and a part of the training data generation processing program 104 may be stored.

Various processors shown below can be used as hardware resources for executing the image file output processing or the training data generation processing described in the above embodiment. Examples of the processor include a CPU which is a general-purpose processor functioning as the hardware resource for executing the image file output processing or the training data generation processing by executing software, that is, a program. Further, examples of the processors include a dedicated electrical circuit such as an FPGA, a PLD, or an ASIC that is a processor having a circuit configuration dedicatedly designed to execute a specific type of processing. A memory is built in or connected to any processor, and any processor also executes the data generation processing by using the memory.

The hardware resources executing the image file output processing or the training data generation processing may be configured by one of these various processors, or may be configured by a combination of two or more processors of the same type or different types (for example, a combination of a plurality of FPGAs or a combination of a CPU and an FPGA). The hardware resource executing the image file output processing or the training data generation processing may be one processor.

As an example in which the hardware resource is configured by one processor, first, there is a form in which one processor is configured by a combination of one or more CPUs and software, and the processor functions as the hardware resource executing the image file output processing or the training data generation processing. Second, as indicated by a system-on-a-chip (SoC) or the like, there is a form in which a processor that implements the functions of the entire system including a plurality of hardware resources executing the image file output processing or the training data generation processing with one integrated circuit (IC) chip is used. As described above, the image file output processing or the training data generation processing is implemented using one or more of the various processors as the hardware resources.

As a hardware structure of these various processors, more specifically, an electrical circuit in which circuit elements such as semiconductor elements are combined can be used. Furthermore, the above-described image file output processing or training data generation processing is merely an example. Accordingly, it goes without saying that unnecessary steps may be deleted, new steps may be added, or a processing order may be changed without departing from the gist.

The described contents and illustrated contents shown above are detailed descriptions of the parts related to the technology of the present disclosure, and are merely an example of the technology of the present disclosure. For example, the above description of the configuration, function, operation, and effect is an example of the configuration, function, operation, and effect of the parts related to the technology of the present disclosure. Therefore, needless to say, unnecessary parts may be deleted, new elements may be added, or replacements may be made to the described contents and illustrated contents shown above within a range that does not deviate from the gist of the technology of the present disclosure. Further, in order to avoid complications and facilitate understanding of the parts related to the technology of the present disclosure, descriptions of common general knowledge and the like that do not require special descriptions for enabling the implementation of the technology of the present disclosure are omitted, in the described contents and illustrated contents shown above.

In the present specification, "A or B" also includes the meaning of "at least one of A or B". That is, the term "A or B" means only A, only B, or a combination of A and B. In addition, in the present specification, the same approach as "A or B" is applied to a case in which three or more matters are represented by connecting the matters with "or".

All documents, patent applications, and technical standards described in the present specification are incorporated in the present specification by reference to the same extent as in a case in which each of the documents, patent applications, technical standards are specifically and individually indicated to be incorporated by reference.

## Claims

1. An image file comprising:
image data including a subject image and an artificial image; and
supplementary data including related data of the artificial image.

2. The image file according to claim 1,
wherein the related data includes type data regarding a type of the artificial image.

3. The image file according to claim 1 or 2,
wherein the related data includes position data regarding a position of the artificial image.

4. The image file according to any one of claims 1 to 3,
wherein the related data includes rights-relationship data regarding a right of the artificial image.

5. The image file according to any one of claims 1 to 4,
wherein the related data includes permission/non-permission data regarding machine learning using the artificial image.

6. The image file according to any one of claims 1 to 5,
wherein the related data includes accuracy data regarding an accuracy of the artificial image.

7. The image file according to any one of claims 1 to 6,
wherein the related data includes percentage data regarding a percentage of the artificial image in an image indicated by the image data.

8. The image file according to any one of claims 1 to 7,
wherein the related data includes processed data regarding processing information of a processed image or a rights relationship of the processed image in a case in which the artificial image is changed into the processed image by a generation apparatus that generates the image file.

9. The image file according to any one of claims 1 to 8,
wherein the related data includes creation data regarding a creation method or a creation entity of the artificial image.

10. The image file according to any one of claims 1 to 9, further comprising:
reference image data including the subject image without including the artificial image.

11. The image file according to any one of claims 1 to 9,
wherein the supplementary data includes viewing location data regarding a viewing location of reference image data including the subject image without including the artificial image.

12. A generation apparatus configured to:
generate image data including a subject image obtained by being imaged by an image sensor and an artificial image;
generate supplementary data including related data of the artificial image; and
generate an image file including the image data and the supplementary data.

13. A data processing method comprising:
an acquisition step of acquiring a plurality of image files; and
a search step of performing a search on the plurality of image files,
wherein the plurality of image files include an image file including image data including a subject image and an artificial image, and supplementary data including related data of the artificial image.

14. The data processing method according to claim 13, further comprising:
a generation step of generating training data for machine learning based on the image file searched in the search step using the supplementary data from the plurality of image files.
